(19) Europäisches Patentamt
European Patent Office
Office européen des brevets

(11) Numéro de publication: **0 323 786 A2**

(12) **DEMANDE DE BREVET EUROPEEN**

(21) Numéro de dépôt: **88403362.2**

(22) Date de dépôt: **29.12.88**

(51) Int. Cl.[4]: **B01D 29/14 , B01D 29/08 , B01D 39/14 , B01D 39/20**

(30) Priorité: **30.12.87 FR 8718363**

(43) Date de publication de la demande: **12.07.89 Bulletin 89/28**

(84) Etats contractants désignés: **BE DE ES FR GB IT NL SE**

(71) Demandeur: **Société Civile S.C.A.G.E.P.**
**45 rue de la Bienfaisance**
**F-75008 Paris(FR)**

(72) Inventeur: **Thelinge, Jean**
**37, rue du général Colin**
**F-78400 Chatou(FR)**

(74) Mandataire: **Doireau, Marc et al**
**OFFICE BLETRY 2, Boulevard de Strasbourg**
**F-75010 Paris(FR)**

(54) **Filtre pour fluides des moteurs à combustion interne et à explosion et autres dispositifs installés sur véhicules et son procédé de fabrication.**

(57) L'élément filtrant (2) comprend de plusieurs dizaines à plusieurs centaines de couches continues superposées concentriques de fibres ou fils liés entre eux, formant un bloc cylindrique poreux rigide avec passage axial, les fibres ou fils sont orientés dans des directions multiples dans chaque couche et leur tassement varie d'une couche à l'autre, la paroi dudit bloc qui a ainsi une structure alvéolaire à perméabilité variable a une épaisseur de 5 à 100 mm, les fibres ou fils sont en une matière choisie parmi les verres, les céramiques, le carbone, les matières plastiques filables et ensimables et les mélanges de ces substances, ces fibres ou fils et leur agent de liaison sont choisis chimiquement inattaquables par le fluide filtré et peuvent être constituées par une âme revêtue d'un agent de liaison, et une paroi repoussant l'eau peut tapisser la surface interne de l'élément filtrant, qui a une finesse de filtration telle qu'exigée par les normes actuelles de l'aéronautique et de l'automobile et une efficacité de filtration de longue durée . La fabrication peut se faire par dépôt de couches concentriques sur un mandrin relié à un pompe aspirante, à partir de suspensions aqueuses des fibres.

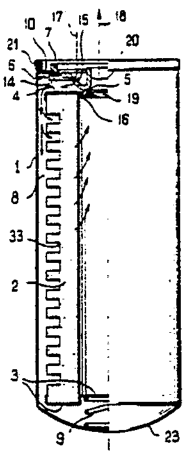


FIG.2

EP 0 323 786 A2

Xerox Copy Centre

## Filtre pour fluides des moteurs à combustion interne et à explosion et autres dispositifs installés sur véhicules et son procédé de fabrication.

Les performances et la fiabilité des moteurs à combustion interne et à explosion (désignés ci-après par moteurs ) sont directement influencées par les pollutions de toute nature, plus particulièrement par les particules en suspension dans les différents fluides énumérés ci-après intervenant dans leur fonctionnement ou celui des différents accessoires spécifiques de leur environnement :

- carburants (hydrocarbures tels que gazole etc.)
- huiles de lubrification et de refroidissement
- air de carburation et air de combustion
- fluides de commande et d'asservissement de différents organes et dispositifs spécifiques comme par exemple ceux qui équipent les véhicules.

La présente invention a pour objet des filtres montés sur les circuits des fluides des moteurs et autres dispositifs installés sur véhicules. Les buts poursuivis sont les suivants :

- abaisser les seuils de filtration des filtres actuels;
- accroître leur durée d'utilisation dans un rapport de 2 à 10;
- générer à la traversée du filtre des pertes de charge qui demeurent voisines de celles existant actuellement (par exemple inférieures à 0,35 bar pour un filtre à gazole avec débit constant de 75 l/h à température ordinaire du fluide ayant une viscosité de 12 centistokes à cette température, l'élément filtrant ayant une hauteur de 100 mm, un diamètre extérieur de 60 mm environ et un diamètre intérieur de 25 mm environ );
- possibilité pour le filtre de supporter des variations de pression différentielle pulsatoires de l'ordre de 15 bars, si nécessaire;
- possibilité de supporter une température des fluides pouvant atteindre 120° C;
- possibilité de supporter des vibrations ( conformément au test suivant : fréquence 3 à 500 Hertz, amplitude ± 2 mm , accélération 10 g, durée 48 h );
- rester à un niveau de prix compatible avec le marché et voisin de celui des filtres actuellement utilisés;
- satisfaire aux normes mentionnées ci-après qui précisent les caractéristiques exigées de rétention des éléments polluants :

les normes civiles internationales : API 1581
les normes militaires des USA : MIL F 8501
les normes militaires françaises : DCEA 5104
les normes de la AEROSPACE INDUSTRY OF AMERICA INC. : NAS 1638
les normes de la SOCIETY OF AUTOMOTIVE ENGINEERS INC : SAE 749 D.

Dans le cadre de la présente invention applicable aux moteurs à combustion interne et à explosion, la cartouche filtrante placée sur le circuit des fluides utilisés dans un véhicule répond aux normes précitées.

De plus, les éléments filtrants doivent être conformes aux normes internationales de fabrication et de contrôle

ISO 4572 Puissance de filtration (test multipass)
ISO 2941 Résistance à l'éclatement
ISO 3968.2 Test de perte de charge en fonction du débit
ISO 3724 Résistance au débit.

En outre , compte-tenu du parc de véhicules existant et des séries produites actuellement, il faut obligatoirement conserver pour les filtres suivant l'invention les présentes normes dimensionnelles qui sont universellement appliquées, ces filtres étant destinés à être installés sur les circuits (pleins débits ou en dérivation) d'alimentation, de distribution, de refroidissement où circulent les fluides précités.

En vue d'atteindre tous les ci-dessus énumérés, l'invention a pour objet un filtre pour fluides des moteurs à combustion interne et à explosion et autres dispositifs installés sur véhicules, ce filtre étant une cartouche filtrante de forme cylindrique comprenant un récipient métallique ou en plastique contenant un élément filtrant avec passage axial , ladite cartouche étant destinée à être montée sur des têtes de filtre de toutes tailles faisant partie des circuits desdits fluides, et la circulation du fluide à filtrer étant prévue préférentiellement de l'extérieur vers l'intérieur de la paroi dudit élément, ledit filtre étant caractérisé en ce que l'élément filtrant comprend de plusieurs dizaines à plusieurs centaines de couches continues superposées concentriques de fibres ou fils liés entre eux, formant un bloc cylindrique poreux rigide avec passage axial, rendu étanche à chaque extrémité par un flasque, en ce que les fibres ou fils sont orientés dans des directions multiples dans chaque couche et en ce que leur tassement varie d'une couche à l'autre, en ce que la paroi dudit bloc cylindrique avec passage axial, qui a ainsi une structure alvéolaire à perméabilité

variable, a une épaisseur de 5 à 100 mm et par conséquent une structure tridimensionnelle , et en ce que les fibres ou fils sont en une matière choisie parmi les verres, les céramiques , le carbone, les matières plastiques filables et ensimables et les mélanges de ces substances , ces fibres ou fils et leur agent de liaison étant en des matières choisies chimiquement inertes à l'égard du fluide filtré, ledit élément filtrant satisfaisant aux normes civiles internationales API 1581, aux normes militaires des U.S.A. MIL F 8501, aux normes militaires françaises DCEA 5104, aux normes de la AEROSPACE INDUSTRY ASSOCIATION OF AMERICA INC. NAS 1638 et à celles de la SOCIETY OF AUTOMOTIVE ENGINEERS INC. SAE 749 D et assurant par conséquent une finesse de filtration qui permet de retenir, dans le cas des combustibles et carburants et des fluides de commande et d'asservissement utilisés dans les véhicules, au moins 50 % des particules de dimensions supérieures ou égales à 2 microns et au moins 95 % des particules de dimensions supérieures ou égales à 5 microns, dans le cas des huiles de graissage et de refroidissement de moteur,au moins 50 % des particules de dimensions supérieures ou égales à 5 microns et au moins 95 % des particules de dimensions supérieures ou égales à 8 microns, et dans le cas de l'air carburant et comburant, au moins 98 % des particules de dimensions supérieures ou égales à 3 microns, dont la concentration dans l'air à filtrer est de 25 mg/m$^3$ , l'humidité relative de l'air étant de 40 à 55 % et sa température de 18 à 30° C, conformément au test ASHRAE 52-68, repris par la norme français X 44012 correspondant à la norme de pollution SAE J 726, ledit filtre ayant aussi une efficacité de filtration quasiment constante jusqu' à son colmatage presque complet et une perte de charge faible, de l'ordre de quelques dixièmes de bar dans le cas des combustibles et carburants et de l'air carburant et comburant.

En particulier , le bloc cylindrique avec passage axial peut avoir une section annulaire, donc délimitée par des cercles, ou une section délimitée par des polygones; ladite section peut aussi avoir une forme quelconque.

Pour les liquides, le volume du récipient métallique ou en plastique doit être d'environ 25 à 40 % et préférablement d'environ 25 à 35 % supérieur au volume de l'élément filtrant pour permettre une bonne répartition du fluide autour de l'élément filtrant.

La surface intérieure dudit récipient sera de préférence rugueuse et, par exemple dans sa version métallique , pourra être recouverte d'une couche mince de PTFE (polytétrafluoréthylène) rugueux.

Pour les liquides , leur entrée et leur sortie se trouvent situées à la même extrémité du filtre et sont assurées par un dispositif appelé tête, même si la position est inversée.

Le filtre n'a pas de soupape de décharge (by pass).

Le ou les matériaux constituant l'élément filtrant doivent bien entendu être inattaquables chimiquement par les fluides qui les traversent.

La structure de la paroi de l'élément filtrant poreux est alvéolaire et tridimensionnelle. Elle est telle que l'écoulement du fluide traversant la paroi va subir une très importante succession de perturbations : décollement des veines de fluide , variations successives de vitesse, création de tourbillons, donc de points de vitesse nulle tant pour les molécules de fluide que pour les particules en suspension. Elles est réalisée pour une que le processus de sédimentation des particules en suspension constituant les éléments polluants dans les fluides soit tel que ce sont d'abord les particules les plus lourdes, et souvent les plus grosses, qui vont perdre leur énergie cinétique, s'accrocher et se coaguler dans la structure filtrante , plus particulièrement dans la région externe de la structure rigide de la paroi poreuse. Le même phénomène se produit pour toutes les autres particules au fur et à mesure que le fluide pénètre dans la structure poreuse . Ce sont les particules les plus légères et souvent les plus fines, qui se trouvent retenues de préférence dans la région interne de la structure rigide poreuse.

La matière de la structure rigide alvéolaire représente en volume 20 à 40 % du volume de l'élément filtrant suivant les caractéristiques du fluide à filtrer, en particulier sa densité et sa viscosité, et la perméabilité désirée pour la structure , qui est directement liée à la perte de charge sélectionnée pour un débit donné et une capacité de rétention donnée.

Ce sont la surface des obstacles, leur forme , leur orientation , leur rugosité qui déterminent cette perméabilité, ainsi également que la tension superficielle des fluides en contact avec les matériaux utilisés .

L'élément filtrant peut présenter, surtout pour les liquides , des cannelures externes plus ou moins rapprochées, de section rectangulaire ou trapézoïdale évasée vers l'extérieur en direction radiale.

Si ceci a comme effet d'accroître la surface externe de filtration de la paroi épaisse , les cannelures sont retenues essentiellement dans la présente invention pour créer des accidents de forme engendrant un balayage tourbillonnaire lors de l'écoulement du fluide, qui arrive par une des extrémités du corps cylindrique du filtre et qui longe la face externe de l'élément filtrant suivant la direction de l'axe du cylindre. Ceci permet d'assurer un décollement des particules lamellaires hybrides et filamenteuses qui se déposent sur la surface externe de l'élément filtrant et ainsi de retarder un colmatage prématuré de cette surface externe.

Plusieurs techniques permettent de réaliser les éléments filtrants épais, poreux et chimiquement inertes répondant aux spécifications sus-indiquées et ayant une structure alvéolaire tridimensionnelle qui fonctionne comme décrit ci-dessus.

Les fibres et fils employés peuvent être en verres classiques ou spéciaux, tels que le "Silionne" défini plus loin , ou en céramiques telles que les silicates de calcium, la silice, les silicates d'aluminium, sans que cette énumération soit limitative. Des matières plastiques utilisables sont les polyamides, les polyesters, les polycarbonates, le polypropylène, les résines poly(méth)acryliques. On peut aussi avoir recours à des mélanges de ces substances.

L'élément filtrant est de préférence en un mat (feutre) de fibres coupées enchevêtrées, ce mat étant plus ou moins épais et dense dans les couches successives, et les fibres ayant un diamètre et une longueur qui varient dans ces couches successives.

A titre indicatif, le diamètre des fibres peut varier de moins de 1 micron à une dizaine de microns, le diamètre externe de l'élément filtrant cylindrique peut être de 40 à 2000 mm , la profondeur des cannelures d'environ 3 à 10 mm, l'épaisseur de l'élément au fond des cannelures peut être de 5 à 100 mm, la hauteur des cannelures et celle des anneaux intermédiaires peut être de 3 à 15 mm, et la largeur des ouvertures dans les couches peut aller d'environ 40 microns à environ 1 micron.

Ces couches de fibres de verres ou de céramiques, de densité constante dans chaque couche, peuvent être obtenues par les procédés classiques tels que le cardage (voile de carde). Les différentes couches sont ensuite enroulées sur un mandrin pour composer un cylindre creux de taille variable en diamètre et en hauteur. Le cylindre peut comprendre de plusieurs dizaines à plusieurs centaines de couches concentriques dans lesquelles les caractéristiques des fibres et leur tassement varient dans les couches successives. Un autre procédé de formation des couches est décrit en détail en référence au dessin; il est un second objet de l'invention.

Pour faire la liaison entre les fibres des différentes couches, on a recours à des résines, par exemple phénoliques, de mélamine ou de styrène. La polymérisation de cette résine assurera la liaison mécanique entre les fibres des couches pour former un élément filtrant à structure tridimensionnelle , rigide et stable satisfaisant aux normes précitées . Les cannelures, lorsqu'elles sont jugées utiles, sont réalisées au tour sur l'élément filtrant.

Les filtres en fibres de verres ou de céramiques, outre leur finesse de filtration résultant de la disposition suivant l'invention des fibres à l'intérieur de la masse de l'élément filtrant, présentent l'avantage qu'ils s'encrassent moins vite que les filtres antérieurs, parce que les impuretés retenues ne s'étalent pas, ne diffusent pas dans lesdites fibres, qui ne sont pas absorbantes contrairement aux fibres de cellulose. De ce fait, les filtres suivant l'invention ont une efficacité de filtration quasiment constante, pour un débit constant du fluide, jusqu'au colmatage presque complet de l'élément filtrant nécessitant son changement, lorsque la perte de charge devient trop grande dans le circuit du fluide à filtrer . Avec la cellulose, la décroissance d'efficacité est progressive et le filtre doit être changé plus souvent.

L'élément filtrant suivant l'invention possède en outre une certaine inertie calorifique par rapport à une membrane filtrante mince en papier, ce qui est intéressant par temps froid pour les filtres chauffants, qui conservent ainsi mieux leur chaleur, notamment pour les filtres de carburants tels que le gazole.

Bien entendu, ce nouveau type d'élément filtrant à efficacité prolongée est rentable même avec une finesse de filtration moindre.

On emploie avantageusement actuellement des filtres du type dit "spin-on" .

La présente invention ne concerne pas ce type en lui-même , mais elle concerne , pour la filtration des liquides, le fait d'introduire un élément filtrant tel que décrit dans la présente invention dans une cartouche du type "spin on" avec toutes les modifications internes qu'il faut envisager pour que le fluide à filtrer circule de l'extérieur vers l'intérieur et qu'il arrive et parte toujours par la même extrémité du filtre.

Il faut noter que si certains filtres sont conçus pour avoir une circulation du fluide de l'intérieur vers l'extérieur, il n'en est pas de même de la présente invention, qui envisage préférentiellement une circulation de l'extérieur vers l'intérieur.

Un filtre "spin-on" est une cartouche jetable et aisément changeable, que l'on monte sur la tête de filtre par vissage ou par tout autre moyen rapide similaire. De telles cartouches ne nécessitent pas d'emballage, ce qui facilite le stockage, le transport et les manipulations. Elles ne conviennent toutefois que pour des pressions de quelques bars à l'intérieur du filtre ou des dépressions faibles de l'ordre de 0,5 bar , ayant une enveloppe mince, puisqu'elle est prévue jetable. Pour des pressions supérieures, pouvant atteindre plusieurs dizaines et mêmes centaines de bars, dans des filtres industriels par exemple, la paroi métallique du filtre doit être épaisse pour supporter la pression; elle peut atteindre 15 à 20 mm; un tel filtre ne sera pas jetable; il est conçu de façon à pouvoir être ouvert pour le remplacement de l'élément filtrant.

Le présent filtre peut être aussi bien du type jetable "spin-on" que du type non jetable. dans ce dernier

cas, les éléments filtrants de rechange nécessitent un emballage.

Selon une variante intéressante pour les filtres à liquides, l'élément filtrant suivant l'invention repousse l'eau présente dans le liquide filtré, c'est-à-dire laisse passer les hydrocarbures et lubrifiants et non pas l'eau. A cet effet, le coeur de l'élément filtrant est pourvu d'une paroi repoussant l'eau, appelée ci-après "paroi hydrorepellente". Cette paroi est constituée d'une couche interne, qui est un feutre de fibres de polyester, et d'une couche externe, qui est une toile en polyester, ces couches absorbant l'eau et la dirigeant par glissement lent vers le fond de la cartouche, où elle s'accumule au-dessous de l'élément filtrant dans un espace prévu à cet effet. Le polyester des deux couches contient avantageusement dans sa masse des additifs améliorant la capacité d'absorption d'eau, comme par exemple 0,4 à 5 % en poids d'un éther de polyalcoylène et 0,3 à 30 % en poids d'un dérivé de sel métallique.

Cette paroi hydrorepellente agit en ce sens que les molécules d'eau au voisinage du polyester se polarisent et vont alors s'attirer les unes les autres pour former des gouttelettes qui, en grossissant , glissent par gravité le long de la paroi.

Le présent filtre remplace notamment les filtres avec élément filtrant en papier faisant une filtration de surface par un filtre avec élément filtrant relativement épais en fibres de verres ou de céramiques faisant une filtration en profondeur et progressive, ce nouveau filtre ayant une efficacité dans le temps beaucoup plus stable et une durée d'efficacité beaucoup plus longue que celles des filtres antérieurs.

Dans formes particulières d'exécution du filtre suivant l'invention sont décrites ci-après, à titre d'exemples purement indicatifs et nullement limitatifs,.en référence au dessin annexé sur lequel :

La figure 1 est une demi-vue de dessus d'une cartouche filtrante prévue pour un liquide.

La figure 2 est une vue partiellement en élévation, et partiellement en coupe suivant la ligne II-II de la figure 1, de cette cartouche filtrante.

La figure 3 est une demi-vue de dessus d'une variante de la cartouche filtrante.

La figure 4 est une vue partiellement en élévation, et partiellement en coupe suivant la ligne IV-IV de la figure 3, de cette variante.

La figure 5 est une courbe montrant l'efficacité en % d'éléments filtrants en cellulose et en fibres de verres, en fonction du temps, au cours d'un essai de colmatage.

La figure 6 montre de façon schématique un dispositif utilisé pour réaliser l'élément filtrant du filtre.

Les moyens de montage, connus en soi, du filtre sur une tête de filtre, ne sont pas représentés sur les figures 1 à 4.

Les figures 1 et 2 représentent un filtre du type "spin-on" dans une version réalisée à partir de tôles minces.

L'enveloppe ou récipient 1 est un embouti en tôle d'épaisseur 5/10 mm environ, de forme cylindrique et dont le fond 23 est bombé, cette enveloppe étant prévue pour supporter des pressions jusqu'à 5 bars.

L'élément filtrant 2, logé dans l'enveloppe , est décrit en détail plus loin.

Il est maintenu à sa partie basse par une coupelle 3 constituée par une tôle emboutie pleine et mince, dont l'empreinte correspond à l'extrémité du secteur cylindrique de l'élément filtrant 2.

L'élément filtrant 2 est maintenu à sa partie supérieure, par une tôle emboutie 4 semblable, mais comportant une empreinte 16 pour recevoir un joint cylindrique 5 assurant l'étanchéité à la partie haute entre le flux entrant 17 et le flux sortant 18 du liquide à filtrer.

De plus l'embouti 4 est percé en son centre d'un trou 19 ayant un diamètre suffisant pour permettre l'évacuation du liquide filtré sans introduire de pertes ce charge mesurables.

Un disque embouti 6, réalisé également en tôle mince mais un peu plus épaisse et ayant aussi une forme circulaire, a une empreinte circulaire 14 pour recevoir un joint d'étanchéité 7, qui assurera l'étanchéité du circuit entrant du liquide à filtrer sur la tête du filtre (non représentée sur les figures ).

En fait, entre ce joint 7 et l'embouti 6, il est interposé une feuille 10 décrite ci-après .

Le disque 6 possède des ouvertures circulaires 15 de diamètre et en nombre suffisants pour permettre , sans perte de charge mesurable, le passage du fluide à filtrer 17, vers l'espace 8 compris entre l'élément filtrant 2 et l'enveloppe cylindrique 1 décrite ci-dessus.

Le disque 6 a sa partie centrale qui appuie sur le joint 5 avant de remonter en forme de cylindre en 20, sur 2 à 5 cm environ suivant la dimension des filtres, pour permettre l'emboîtage du conduit ainsi formé sur la sortie du fluide filtré prévue dans la tête de filtre (non représentée sur les figures).

Au montage, il est introduit, à la partie basse du cylindre fermé 1, un ressort 9 dont le but est de presser l'élément filtrant 2 sur les tôles embouties 3 et 4, pour empêcher le liquide à filtrer 17 de passer le long des surfaces de contact de ces tôles avec l'élément filtrant 2.

Il est ensuite rapporté un disque en tôle très mince 10, qui possède une empreinte circulaire pour recevoir directement le joint d'étanchéité 7 mentionné ci-dessus.

Ce disque est plié à sa partie haute 21 sur le bord du corps 1 et cette opération entraîne un rétreint de ce bord supérieur, si bien que l'embouti 6 est bloqué .

Tout l'ensemble constitue donc une cartouche à priori rigide, mais non démontable, et donc jetable.

Les joints doivent résister à 120° C environ et être compatibles avec les liquides filtrés; ils peuvent être en caoutchouc nitrile, ou en un dérivé de polytétrafluoréthylène. L'intérieur du récipient métallique doit avoir reçu doit avoir reçu une protection anticorrosion, pour éviter qu'il ne s'oxyde au contact du liquide filtré.

Les figures 3 et 4 représentent la version d'une cartouche "spin-on" dans le cas où il est prévu une paroi repoussant l'eau 12.

Une autre différence dans cette variante provient du fait que la pièce 3b correspondant à l'embouti 3 a son bord 22 qui forme ressort et joint d'étanchéité contre le bord de la paroi interne du corps 1, empêchant ainsi le fluide à filtrer de se trouver dans l'espace 11 compris entre le fond 23 du corps 1 et le flasque 3b.

Ce flasque 3b est en outre percé de trous fins 13 pour permettre à l'eau retenue par les nappes internes hydrofuges de la paroi 12 de s'accumuler dans le fond 11 de la cartouche pendant toute la durée de vie de cette dernière.

Il faut signaler aussi que la partie inférieure de l'élément filtrant 2 est constituée par un cylindre plein 24, en fait un disque épais d'environ une échancrure (voir ci-après la description relative à cet élément filtrant) et permettant à l'eau de passer, mais peu, le liquide à filtrer ayant une densité généralement inférieure à celle de l'eau.

Les éléments de cette variante, jouant le même rôle que ceux de la réalisation suivant les figures 1 et 2, portent les mêmes chiffres de référence.

Les courbes de la figure 5 montrent nettement la beaucoup plus grande constance de l'efficacité dans le temps d'un élément filtrant en fibres de verres suivant l'invention, en comparaison de l'efficacité d'un élément filtrant antérieur en cellulose.

La figure 6 illustre le procédé employé suivant l'invention pour réaliser un élément filtrant.

Suivant les règles de l'art en pratique actuellement dans la technique dite "au mouillé", un mandrin 25 creux et perforé est plongé dans une cuve 26 contenant de l'eau dans laquelle des fibres coupées en verre ou en céramique sont maintenues en suspension à l'aide d'un agitateur 27. La cuve est alimentée en fibres coupées 28 par un tapis roulant 29 et elle est aussi alimentée en eau à niveau constant par des moyens non représentés. Un tuyau flexible 30 relie le mandrin à une pompe 31, qui aspire suivant F de l'eau 32 sans fibres, qui peut être recyclée dans la cuve. Cette aspiration attire les fibres coupées sur le mandrin pour former autour de celui-ci les couches, qui constitueront l'élément filtrant du filtre.

Cet élément filtrant a la forme d'un cylindre creux de diamètres extérieur et intérieur ainsi que de longueur appropriés au débit et à la nature du liquide à filtrer.

Il est constitué de couches concentriques continues formées à partir de fibres coupées de verres ou de céramiques .

Le diamètre des fibres résultant de la coupe d'un fil varie entre 3 et 10 microns environ et leur longueur varie de 20 à 50 millimètres environ. Le titre du fil élémentaire varie de 100 à 30 décitex environ .

Le poids de chaque couche par $m^2$ varie de 90 à 300 grammes environ.

L'épaisseur des couches est répartie en six classes définies ci-après :

| | | | |
|---|---|---|---|
| N° 1 : | 35 à 45 µm | N° 4 : | 100 à 110 µm |
| N° 2 : | 50 à 60 µm | N° 5 : | 120 à 130 µm |
| N° 3 : | 70 à 90 µm | N° 6 : | 140 à 180 µm |

Dans les couches de la classe N° 1 à la classe N° 6 , les dimensions des fibres croissent et la densité de fibres décroît, par exemple de la façon suivante :

longueur moyenne des fibres: 20,24,28,32,36,40,50 mm; diamètre moyen des fibres : 3, 5, 6, 7, 9, 10 microns; poids moyen au $m^2$ des couches :300,270,210,180,150,90 g.

Les capacités de filtration progressive (exprimées en dimensions des impuretés arrêtées), en partant du diamètre extérieur de l'élément filtrant pour aller vers son diamètre intérieur, sont approximativement et de préférence :

| | |
|---|---|
| dans le premier quart<br>dans le deuxième quart<br>dans le troisième quart<br>dans le dernier quart | 20 à 30 microns,<br>10 à 20 microns,<br>5 à 10 microns,<br>1 à 5 microns . |

Pour un filtre destiné au filtrage du gazole, l'élément filtrant a, par exemple, un diamètre extérieur de 65 à 67 mm et un diamètre intérieur de 25,4 mm.

Si l'on divise théoriquement le cylindre creux ainsi déterminé en quatre cylindres creux concentriques , d'épaisseur égale, et en appelant zone 1 le cylindre le plus extérieur et zone 4 le cylindre le plus intérieur, la constitution des zones est, par exemple, la suivante :

| | |
|---|---|
| Zone 1 :<br>Zone 2 :<br>Zone 3 :<br>Zone 4 : | 15 couches environ de la classe N° 6 et 20 couches environ de la classe N° 5,<br>45 couches environ de la classe N° 4<br>65 couches environ de la classe N° 3<br>40 couches environ de la classeN° 2 et 55 couches environ de la classe N° 1. |

Pour réaliser ces couches par voie humide, l'un des procédés est le suivant :

Différentes cuves remplies d'eau ont en suspension des fibres coupées de diamètre et longueur approximativement homogènes et dont on maintient la densité à peu près constante par brassage et apport de fibres; alimentation et agitation assurent l'homogénéité du milieu.

C'est le fait de pouvoir réaliser plusieurs dizaines à plusieurs centaines de couches convenablement liées entre elles et avec orientation aléatoire des fibres qui constitue un des points importants de la présente invention, car ceci est une véritable innovation par rapport à tous les autres filtres épais en fibres de verres qui n'ont qu'un nombre très limité de couches (souvent deux seulement ) avec en général une orientation spécifique des fibres, tantôt radiale, tantôt longitudinale, tantôt à 30° etc...

Un mandrin creux percé de centaines de trous de très petit diamètre est relié à une pompe aspirante (voir figure 6). Pour agglomérer différentes dimensions de fibres, il faut obligatoirement plonger le mandrin successivement dans différents bains; la variation de la pression d'aspiration de la pompe, ainsi que le temps de séjour du mandrin dans la cuve et les dimensions (diamètre et longueur) des fibres coupées amenées dans la cuve permettent de moduler la densité en fibres et l'épaisseur des couches.

Plusieurs couches d'une même classe sont déposées en une seule opération, qui dure jusqu'à ce que l'épaisseur totale voulue soit atteinte. Au fur et à mesure que l'épaisseur du dépôt croît, il faut toutefois augmenter le débit et la puissance d'aspiration de la pompe, pour vaincre les pertes de charge qui augmentent, bien que les couches les plus externes, déposées en dernier, soient faites avec les fibres les plus grosses et avec la plus faible densité de fibres coupées, donc présentent les plus larges passages pour le liquide à filtrer.

Les liants sont des résines phénoliques ou de mélamine ou de styrène préalablement introduites dans les bains précités. Après l'ensemble des opérations de dépôt des couches de fibres sur le mandrin, on introduit celui-ci portant les couches dans un four chauffé à la température correspondant à la polymérisation du liant choisi. L'évaporation du solvant de la résine a lieu avant que la polymérisation ne s'amorce. A la sortie du four, un calandrage du mat mis en rotation avec son mandrin et sur lequel appuie légèrement un autre cylindre assure la liaison des fibres coupées entre elles, nivelle la surface du mat et calibre l'élément filtrant.

Le pourcentage de liant est de 3 à 5 % en poids au maximum par rapport au poids de l'ensemble des couches.

Les cannelures 33, si elles doivent exister, sont ensuite exécutées sur un tour.

L'élément filtrant terminé est suffisamment rigide pour être finalement retiré du mandrin, alors que, dans la plupart des éléments filtrants épais antérieurs, le mandrin est conservé pour assurer la rigidité . L'élément filtrant présentement obtenu est de plus capable de supporter une pression différentielle de l'ordre de 15 à 20 bars .

Les cannelures effectuées par tournage après polymérisation du liant comme sus-indiqué sont faites dans la zone 1 précitée; elles ont un pas de 5 mm environ et une profondeur identique et elles sont espacées également de 5 mm.

Les fibres de céramiques ont comme caractéristique d'être mauvaises conductrices de la chaleur; leur emploi peut donc être intéressant pour traiter le problème du défigeage des paraffines dans le cas de la filtration du gazole.

Dans un filtre à gazole, les vitesses d'écoulement ne doivent pas dépasser 3 m/s et les pertes de charge doivent être de 0,20 à 0,35 bar . Dans un filtre à lubrifiant , la vitesse d'écoulement maximale doit être réduite de moitié et les pertes de charge peuvent être plus élevées.

La paroi hydrorepellente 12 (figure 4) est composée

1°) d'un feutre d'épaisseur 0,2 à 0,3mm , dont les fibres proviennent du découpage d'un fil de polyester de titre 3 deniers environ, ces fibres ayant une longueur variant de 80 à 110 mm environ. le fil de polyester a subi avant découpage une texturation de 7 à 8 ondulations par cm.

Ladite paroi est composée

2°) d'une armure, qui est une toile en polyester, dont les fils texturés de chaîne et de trame sont des fils de 26 deniers, torsion 1600 spires environ.

Pour améliorer les caractéristiques d'absorption de l'eau du feutre, il est utilisé des dérivés de sels mono- ou dimétalliques de divers acides : phosphoniques, phosphoreux, phosphoriques, carboxyliques, sulfiniques; tous ces produits sont connus pour cet usage. On peut indiquer les suivants :

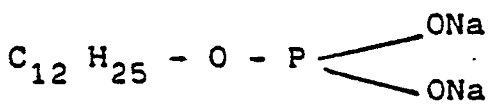

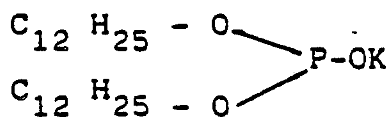

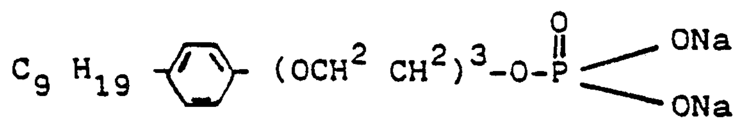

Le mélange avec le polyester est effectué avant le filage de celui-ci. Ces additifs modifient la tension superficielle interfaciale eau / polyester et améliorent les effets dus à la texturation du fil.

Pour la fabrication de l'élément filtrant, la paroi hydrorepellente est placée sur le mandrin sous forme d'un manchon de la façon suivante : le feutre est déposé sur la toile, l'ensemble est enroulé en un manchon de diamètre approprié , la toile étant à l'intérieur, les deux bords qui se recouvrent sont collés au moyen d'un adhésif et le manchon est enfilé sur ledit mandrin, en vue d'être recouvert par les couches successives de fibres de verres ou de céramiques, dont il est question ci-dessus. Ce manchon est très mince et ne peut pas être représenté à l'échelle convenable à la figure 4.

Dans la variante avec paroi hydrorepellente, cette dernière n'existe donc que sur la surface interne de l'élément filtrant.

Dans le fond de cet élément, sur la coupelle 3b percée de trous et maintenant l'élément filtrant en place en coopération avec le ressort 9, il est prévu un disque 24 plein, de même composition que l'élément filtrant, posé sur la coupelle et ayant, dans l'exemple considéré, une épaisseur de 5 à 6 mm, donc approximativement égale à la hauteur d'une cannelure; sa capacité de filtration est de l'ordre de 20 microns.

La présente invention envisage également de remplacer les fibres de verres ou de céramiques par des fibres réalisées par coupage à partir de fils à deux composants, l'un interne , l'autre externe, le composant externe permettant d'assurer un thermosoudage des fibres entre elles et faisant par conséquent office d'agent de liaison , ce qui supprime le liant précédemment utilisé. Le diamètre des fibres varie comme indiqué ci-dessus au sujet des fibres de verres ou de céramiques. Les fibres sont constituées d'une âme notamment et avantageusement en "Silionne R ou S" (verre spécial fabriqué par la Société française VETROTEX à partir d'un mélange de sable, kaolin et dolomie) qui, après un désensimage thermique entre 250° et 300° C est enrobée de polypropylène, ou de polyuréthane , ou de copolyesters d'acide téréphtalique et d'acide isophtalique. Le rapport section transversale de l'âme / section transversale totale de la fibre ou du fil est de 40 à 90 % . L'âme des fibres, dont le diamètre peut varier de 2 à 12 µm, peut aussi être revêtue uniquement d'un agent de pontage très mince représentant environ 15 / 1000 en poids de l'ensemble et qui est du A 1100 (produit organique fabriqué par CIBA GEIGY et SANDOZ) ou du γ-aminopropyl-triéthoxysilane.

Pour effectuer l'enrobage des fibres de "Silionne" par du polypropylène par exemple, la poudre de

polymère est émulsionnée dans de l'eau à une concentration en poids de 30 % par rapport à l'eau . Le taux des fibres dans l'eau est en poids de 20 à 40 % par rapport à l'eau .

Il est procédé avec ces fibres enrobées comme décrit précédemment au sujet des fibres de verres et de céramiques pour tout ce qui concerne le mode de réalisation des couches successives de fibres sur le mandrin.

Quant ces opérations sont achevées, le mandrin ainsi recouvert est introduit dans une enceinte chauffante où on lui fait subir des variations cycliques de température pendant 8 à 10 mm environ, au voisinage et au-delà de la température de cristallisation du polypropylène qui est de 130° C, c'est-à-dire entre 130 et 145° C . Le nombre de cycles est compris entre 2 et 10 et est fonction de la taille des cristaux que l'on désire obtenir. Après ce traitement thermique, l'élément filtrant rigide obtenu est retiré du mandrin..

La cristallisation du polypropylène à deux effets :

- Il se développe à la surface des fibres des irrégularités cahotiques et rugueuses du type dit "peau de requin".

- La cristallisation engendre entre les fibres en contact des pontages plus ou moins développés par formation de cristaux communs, assurant ainsi les liaisons nécessaires à la tenue des éléments filtrants et leur conférant une rigidité propre, une résistance à la pression différentielle exercée par le fluide filtré et une tenue aux vibrations.

La réalisation d'une paroi interne hydrorepellente est possible dans les mêmes conditions que celles décrites précédemment.

Les enrobages et revêtements avec les autres polymères et agents de pontage précités sont effectués de la même manière , avec une adaptation à chaque cas particulier de la concentration dans l'eau du produit employé et des températures du traitement thermique .

Un autre procédé d'obtention des éléments filtrants épais poreux tridimensionnels et chimiquement inertes selon la présente invention consiste à utiliser des fils à deux composants tels que décrits ci-dessus et à enrouler ces fils continus sur une bobine suivant les techniques bien connues dites de bobinage circonférentiel, ou de satellite, ou hélicoïdal. Ce procédé est un autre objet de l'invention.

Les variations de densité et d'orientation des enroulements sont obtenues en faisant varier la tension de délivrance du fil au guide -fil du dispositif de balayage, la vitesse de balayage du guide- fil, ainsi que la vitesse de rotation et l'inclinaison de l'axe de la bobine , ceci pour obtenir un effet semblable à celui réalisé par la variation de densité et l'orientation au hasard des fibres dans le procédé précédemment décrit. Le diamètre de l'âme des fils utilisés varie de 2 à 12 µm et plusieurs fils (en un nombre de 2 à 60) peuvent être bobinés groupés, ce qui équivaut à une augmentation du diamètre du fil et permet de modifier la porosité de l'élément filtrant en fonction de la finesse de filtration désirée.

L'âme du fil est par exemple en "Silionne R ou S" , ou en silicate d'alumine ($Al_2O_3$ 85 % $SiO_2$ 15 % ) , ou en "Kevlar" (polyamide aromatique dit aramide, fabriqué par Du Pont de Nemours), suivant les résistances mécaniques recherchées tant à la fabrication qu'à l'utilisation. Les enrobages ou les revêtements possibles du fil sont identiques quant à leur nature à ceux indiqués précédemment pour les fibres à deux composants . Pour l'opération d'enrobage ou de revêtement de l'âme qui est bobinée sur un support , on débobine l'âme, on la fait circuler au contact du liant et on réembobine ensuite l'âme ainsi traitée. Le liant est utilisé en suspension dans l'eau ou sous forme solide.

Le diamètre du fil à deux composants est tel que le rappport du diamètre de l'âme au diamètre final est de 40 à 90 %.

Le traitement thermique de l'élément filtrant formé sur la bobine est identique à celui décrit précédemment pour les fibres à deux composants, afin d'assurer le pontage par cristallation. La bobine est ensuite séparée de l'élément filtrant rigide ainsi obtenu.

La rugosité de la peau du fil, qui a une structure dite "peau de requin", est semblable à celle décrite précédemment. Le développement des cristaux de liaison par les traitements thermiques crée des alvéoles de passage des fluides, qui peuvent être considérées en première approximation comme ayant une répartition aléatoire.

Cette technique par bobinage d'un fil ou de fils groupés permet aussi de réaliser un filtre avec une paroi hydrorepellente intérieure telle que décrite précédemment. Il faut la fabriquer au préalable et l'enfiler sur la bobine nue de fabrication de l'élément filtrant.

Des modifications de détail du domaine des équivalents techniques peuvent être apportées aux filtres décrits ci-dessus et à leurs procédés de fabrication, sans que l'on sorte pour cela du cadre de l'invention.

## Revendications

1. - Filtre pour fluides des moteurs à combustion interne et à explosion et autres dispositifs installés sur véhicules, ce filtre étant une cartouche filtrante de forme cylindrique comprenant un récipient (1) métallique ou en plastique contenant un élément filtrant avec passage axial , ladite cartouche étant destinée à être montée sur des têtes de filtre de toutes tailles faisant partie des circuits desdits fluides, et la circulation du fluide à filtrer étant prévue préférentiellement de l'extérieur vers l'intérieur de la paroi dudit élément, ledit filtre étant caractérisé en ce que l'élément filtrant (2) comprend de plusieurs dizaines à plusieurs centaines de couches continues superposées concentriques de fibres ou fils liés entre eux, formant un bloc cylindrique poreux rigide avec passage axial, rendu étanche à chaque extrémité par un flasque, en ce que les fibres ou fils sont orientés dans des directions multiples dans chaque couche et en ce que leur tassement varie d'une couche à l'autre, en ce que la paroi dudit bloc cylindrique avec passage axial, qui a ainsi une structure alvéolaire à perméabilité variable, a une épaisseur de 5 à 100 mm et par conséquent une structure tridimensionnelle , et en ce que les fibres ou fils sont en une matière choisie parmi les verres, les céramiques , le carbone, les matières plastiques filables et ensimables et les mélanges de ces substances , ces fibres ou fils et leur agent de liaison étant en des matières choisies chimiquement inertes à l'égard du fluide filtré, ledit élément filtrant satisfaisant aux normes civiles internationales API 1581, aux normes militaires des U.S.A. MIL F 8501, aux normes militaires françaises DCEA 5104, aux normes de la AEROSPACE INDUSTRY ASSOCIATION OF AMERICA INC. NAS 1638 et à celles de la SOCIETY OF AUTOMOTIVE ENGINEERS INC. SAE 749 D et assurant par conséquent une finesse de filtration qui permet de retenir, dans le cas des combustibles et carburants et des fluides de commande et d'asservissement utilisés dans les véhicules, au moins 50 % des particules de dimensions supérieures ou égales à 2 microns et au moins 95 % des particules de dimensions supérieures ou égales à 5 microns, dans le cas des huiles de graissage et de refroidissement de moteur, au moins 50 % des particules de dimensions supérieures ou égales à 5 microns et au moins 95 % des particules de dimensions supérieures ou égales à 8 microns , et dans le cas de l'air carburant et comburant, au moins 98 % des particules de dimensions supérieures ou égales à 3 microns, dont la concentration dans l'air à filtrer est de 25 $mg/m^3$, l'humidité relative de l'air étant de 40 à 55 % et sa température de 18 à 30 °C, conformément au test ASHRAE 52-68, repris par le norme française X 44012 correspondant à la norme de pollution SAE J 726, ledit filtre ayant aussi une efficacité de filtration quasiment constante jusqu'à son colmatage presque complet et une perte de charge faible, de l'ordre de quelques dixièmes de bar dans le cas des combustibles et carburants et de l'air carburant et comburant.

2.- Filtre suivant la revendication 1, caractérisé en ce que, dans le cas de la filtration du gazole, il a une perte de charge comprise entre 0,20 et 0,35 bars.

3.- Filtre suivant la revendication 1 ou 2, caractérisé en ce que l'élément filtrant présente des cannelures (33) externes, de section rectangulaire, ou trapézoïdale évasée vers l'extérieur en direction radiale.

4.- Filtre suivant l'une quelconque des revendications 1 à 3, caractérisé en ce que, lorsqu'il est prévu pour des liquides, le volume du récipient (1) métallique ou en plastique est d'environ 25 à 35 % supérieur au volume de l'élément filtrant.

5.- Filtre suivant l'une quelconque des revendications 1 à 4, caractérisé en ce que, dans l'élément filtrant (2) , les fibres sont sous forme de feutre de fibres coupées dont le diamètre , la longueur et le tassement varient das les couches successives.

6.- Filtre suivant l'une quelconque des revendications 1 à 5, caractérisé en ce que les fibres des couches de l'élément filtrant (2) sont liées entre elles par une résine polymérisable.

7.- Filtre suivant l'une quelconque des revendications 1 à 5 , caractérisé en ce que les fibres des couches de l'élément filtrant (2) sont constituées de deux composants, à savoir une âme et un revêtement qui est l'agent de liaison des fibres.

8.- Filtre suivant l'une quelconque des revendications 1 à 4, dans lequel les couches de l'élément filtrant (2) sont formées de fils liés entre eux, caractérisé en ce que ces fils sont constitués de deux composants, à savoir une âme et un revêtement qui est l'agent de liaison des fils.

9.- Filtre suivant l'une quelconque des revendications 1 à 8, caractérisé en ce que son élément filtrant (2) est emprisonné dans ledit récipient (1) et en ce que cet élément n'étant ni accessible, ni remplaçable, le filtre est jetable et comprend un récipient à paroi mince ne pouvant pas supporter des pressions supérieures à quelques bars.

10.- Filtre suivant l'une quelconque des revendications 1 à 8, caractérisé en ce que ledit récipient (1) formant son enveloppe peut être ouvert pour le remplacement de l'élément filtrant (2).

11.- Filtre suivant l'une quelconque des revendications 1 à 10 , caractérisé en ce que le coeur de l'élément filtrant est pourvu d'une paroi (12 ) repoussant l'eau, constituée d'une couche interne, qui est un feutre de fibres de polyester texturé, et d'une couche externe qui est une toile en polyester texturé, ces couches absorbant l'eau et la dirigeant vers le fond de la cartouche, où elle s'accumule au-dessous de l'élément filtrant dans un espace (11) prévu à cet effet.

12.- Filtre suivant la revendication 11, caractérisé en ce que le polyester des deux couches contient dans sa masse des additifs améliorant la capacité d'absorption d'eau, par modification de la tension superficielle interfaciale eau/ polyester.

13.- Filtre suivant la revendication 12, caractérisé en ce que ledit polyester contient comme additifs 0,4 à 5 % en poids d'un éther de polyalcoylène et 0,3 à 30 % en poids d'un dérivé de sel métallique.

14.- Procédé de fabrication d'un filtre suivant l'une quelconque des revendications 6 et 9 à 13, caractérisé en ce que l'élément filtrant (2) est formé par un dépôt de plusieurs dizaines à plusieurs centaines de couches concentriques successives en feutre de fibres coupées de verres ou de céramiques sur un mandrin (25) creux perforé, plongé dans une cuve (26 ) contenant une suspension dans de l'eau desdites fibres (28) et contenant l'agent de liaison qui est une résine polymérisable, le mandrin étant relié à une pompe aspirante (31) et étant plongé successivement dans des cuves (26) différentes correspondant à des dimensions différentes des fibres des couches et à des densités de fibres différentes dans les couches, et en ce que le mandrin portant l'ensemble des couches est ensuite introduit dans un four, où ledit agent de liaison est polymérisé à chaud pour lier entre elles les fibres des couches, après quoi l'élément filtrant (2) obtenu, qui a une structure rigide stable, est retiré du mandrin (25).

15.- Procédé de fabrication d'un filtre suivant l'une quelconque des revendications 7 et 9 à 13, caractérisé en ce que l'élément filtrant (2) est formé par un dépôt , sur un mandrin (25) creux perforé, de plusieurs dizaines à plusieurs centaines de couches concentriques successives en feutre de fibres constituées de deux composants, à savoir une âme et un revêtement qui est l'agent de liaison des fibres, le mandrin étant plongé dans une cuve (26) contenant une suspension dans de l'eau desdites fibres , étant relié à une pompe aspirante (31) et étant plongé successivement dans des cuves (26) différentes correspondant à des dimensions différentes des fibres des couches et à des densités de fibres différentes dans les couches, et en ce que le mandrin portant l'ensemble des couches est ensuite soumis à un traitement thermique qui a pour résultat un pontage des fibres par l'agent de liaison , après quoi l'élément filtrant (2) obtenu, qui a une structure rigide stable, est retiré du mandrin.

16.- Procédé de fabrication d'un filtre suivant l'une quelconque des revendications 8 et 9 à 13, caractérisé en ce que l'élément filtrant (2) est réalisé , à partir de fils continus constitués de deux composants, à savoir une âme et un revêtement qui est l'agent de liaison des fils, par enroulement de ces fils sur une bobine de façon à former sur celle-ci de plusieurs dizaines à plusieurs centaines de couches concentriques successives de fils, en faisant varier la tension de délivrance des fils, la vitesse de balayage du guide-fil, ainsi que la vitesse de rotation et l'inclinaison de l'axe de la bobine pour faire varier la densité et l'orientation des enroulements, et en ce que la bobine portant l'ensemble des couches est ensuite soumise à un traitement thermique qui a pour résultat un pontage des fils par l'agent de liaison, après quoi l'élément filtrant (2 ) obtenu, qui a une structure rigide stable, est séparé de la bobine.

17.- Procédé suivant l'une quelconque des revendications 14 à 16, caractérisé en ce que l'on enfile tout d'abord sur le mandrin (25 ) ou sur ladite bobine un manchon (12) qui est une paroi repoussant l'eau , constituée d'un feutre absorbant l'eau en fibres de polyester texturé et d'une toile en polyester texturé qui est placée en contact direct avec le mandrin ou ladite bobine, et en ce que lesdites couches concentriques sont déposées autour dudit manchon (12).

18.- Procédé suivant la revendication 17, caractérisé en ce que le polyester utilisé contient dans sa masse des additifs améliorant la capacité d'absorption d'eau .

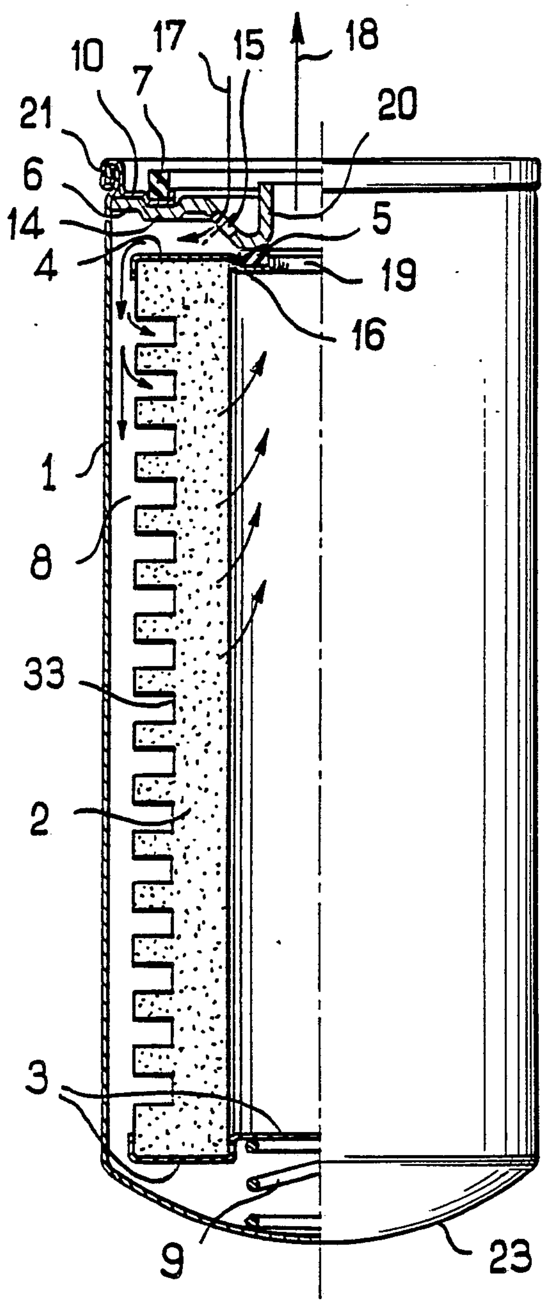


FIG_2

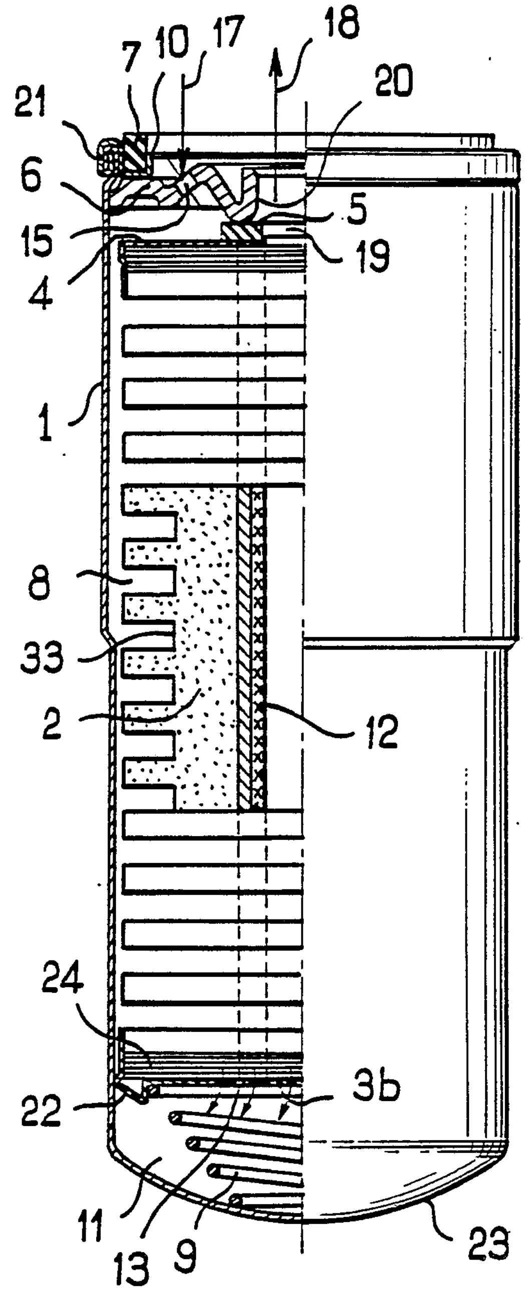


FIG_4

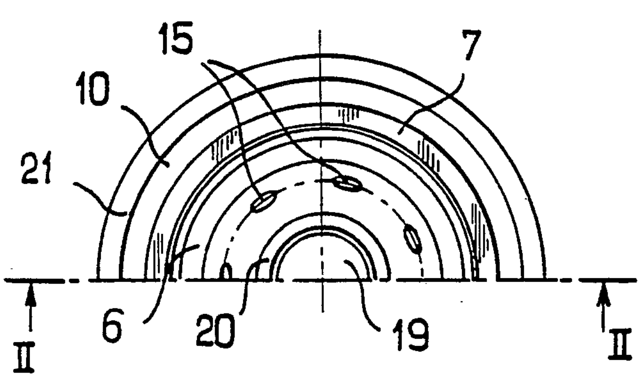


FIG_1

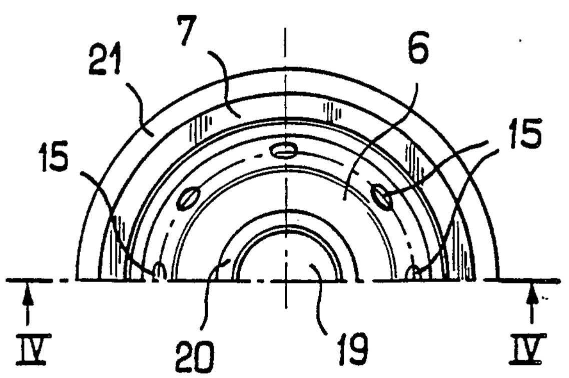


FIG_3

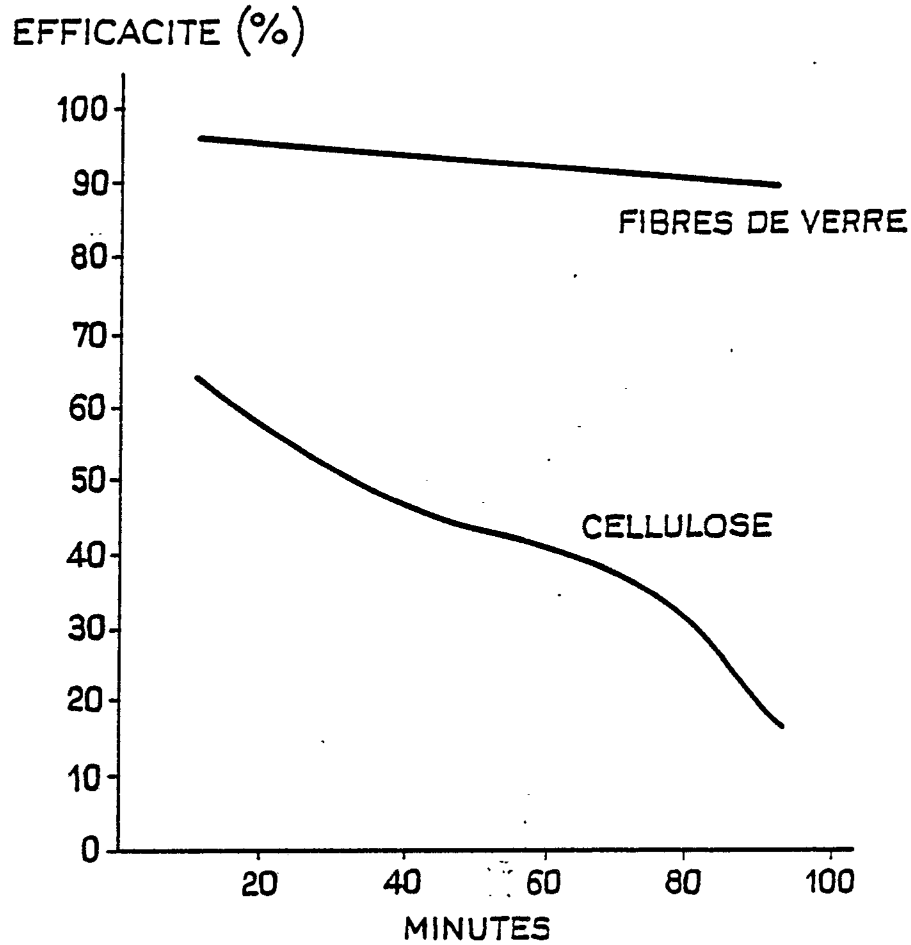
EFFICACITE (%)
100
90
80
70
60
50
40
30
20
10
0
20
40
60
80
100
MINUTES
FIBRES DE VERRE
CELLULOSE

FIG_5

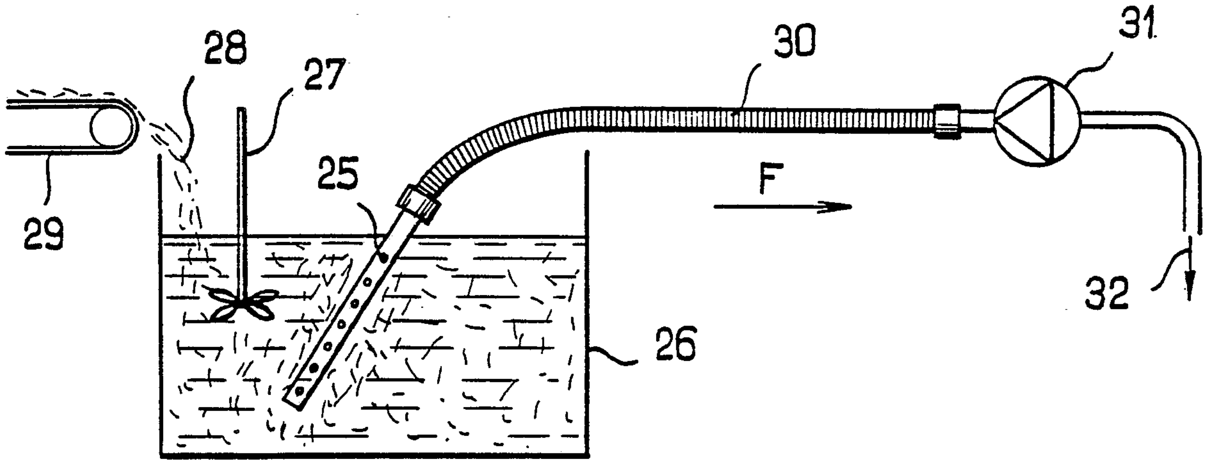
28
27
30
31
25
F
29
26
32

FIG_6